# EUROPÄISCHE PATENTANMELDUNG

(11) **EP 0 615 935 A2**
(43) Veröffentlichungstag der Anmeldung: **21.09.1994**
(21) Anmeldenummer: 94103094.2
(22) Anmeldetag: 02.03.1994
(51) Int. Cl.: B65G 67/06, B65D 88/26

(54) **Einrichtung zum Beladen unterschiedlich grosser Waggons mit Schüttgut**

(30) Priorität: 19.03.1993 DE 4308727
(71) Anmelder: PWH Anlagen + Systeme GmbH, D-66386 St. Ingbert-Rohrbach (DE)
(72) Erfinder: Arend, Jürgen, D-66123 Saarbrücken (DE)

(57) **Zusammenfassung**

Vorgeschlagen wird eine Einrichtung zum Beladen unterschiedlich großer Waggons mit Schüttgut, das in einem Bunker (4) angeordnet ist, mit einem in mehrere Kammern (15,16,17) unterteilten Behälter (14), der auslaufseitig für die wahlweise Beladung mit mehreren Auslaufschiebern (18 bis 21) versehen ist. Der Behälter (14) ist als Wiegebehälter ausgebildet, wobei die einzelnen Kammern (15,16,17) zur Aufnahme einer vorgegebenen Schüttgutmenge ausgebildet sind.

## Beschreibung

Die Erfindung betrifft eine Einrichtung zum Beladen unterschiedlich großer Waggons mit Schüttgut.

Beim Beladen von insbesondere Eisenbahnwaggons mit unterschiedlich großem Fassungsvermögen stellt sich vielfach das Problem, daß eintelne oder mehrere der Waggons entweder überschüttet oder aber zu gering beladen werden. Zwischen einer Schüttgutabgabestelle und dem jeweiligen Waggon müßten demzufolge Meßeinrichtungen vorgesehen werden, die diesem Problem Rechnung tragen. Derartige Meßeinrichtungen werden jedoch als zu ungenau angesehen, um dem dargelegten Problem hinreichend Rechnung zu tragen.

Ziel des Erfindungsgegenstandes ist es, eine Möglichkeit zu schaffen, mit gleichgearteten Aufgabeelementen auch Waggons unterschiedlicher Größe entsprechend ihrem jeweiligen Fassungsvermögen beladen zu können.

Dieses Ziel wird erreicht durch eine Einrichtung zum Beladen unterschiedlich großer Waggons mit Schüttgut, das in einem Bunker angeordnet ist, und einen in mehrere Kammern unterteilten Behälter aufweist, der auslaufseitig für die wahlweise Beladung mit mehreren Auslaufschiebern versehen ist.

Der Behälter ist vorzugsweise als Wiegebehälter ausgebildet und weist mindestens drei Kammern auf.

Der Bunker ist oberhalb des Wiegebehälters vorgesehen, wobei zwischen dem Bunker und dem Wiegebehälter eine verfahrbare Schurren-Bandeinheit angeordnet ist.

Die erfindungsgemäße Waggonbeladestation ist in der Lage, zwölf unterschiedlich große Waggons, die auch in unterschiedlichster Zusammensetzung innerhalb eines Zuges auftreten können, mit dem jeweils zutreffenden Fassungsvermögen zu befüllen. Dabei sollen die Großwaggons mit einem Fassungsvolumen von ca. 85 cbm über vier Auslaufschieber befüllt werden, während die Kleinwaggons mit einem Volumen von ca. 30 cbm lediglich über zwei Auslaufschieber befüllt werden, da, abhängig vom Fassungsvermögen, auch die Länge der Einfüllöffnung variiert und nur die Möglichkeit besteht, über eine Rangierlok den kompletten Zug mit einer vorher festzulegenden gleichbleibenden Geschwindigkeit unter der Beladestation vorzuschieben bzw. vorzuziehen.

Die zwischengeschaltete Schurren-Bandeinheit erlaubt die Möglichkeit, bei einem Materialwechsel die Gesamtanlage komplett leerzufahren, wobei noch in dem Bunker enthaltenes Material in einen weiteren Aufgabebehälter überführt werden kann, von wo aus es seiner weiteren Bestimmung zugeführt wird.

Der Erfindungsgegenstand ist anhand eines Ausführungsbeispieles in der Zeichnung dargestellt und wird wie folgt beschrieben. Es zeigen:
- Figur 1 -: Einrichtung zum Beladen unterschiedlich großer Waggons mit Schüttgut in der Vorderansicht
- Figur 2 -: Einrichtung zum Beladen unterschiedlich großer Waggons mit Schüttgut in der Seitenansicht.

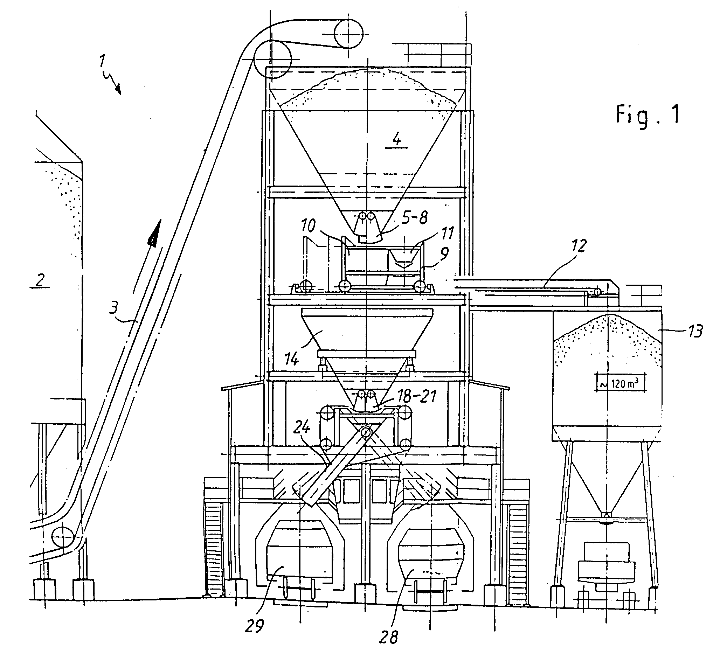

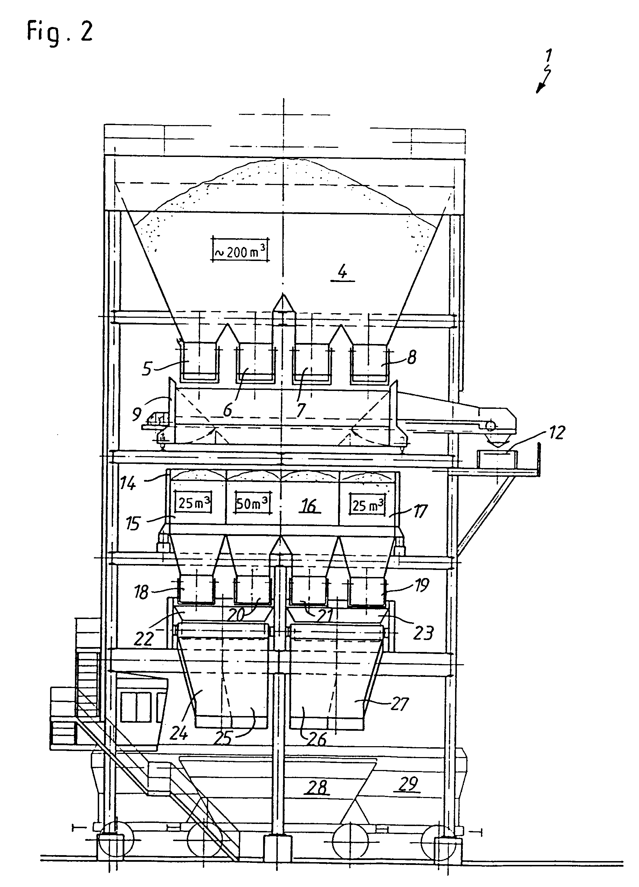

Die Figuren 1 und 2 zeigen die erfindungsgemäße Einrichtung 1 in verschiedenen Ansichten. Angedeutet ist ein Großraumbehälter 2, der Material auf ein Fördermittel 3 aufgibt, welches es nach oben transportiert und in einen Bunker 4 aufgibt. Der Bunker 4 ist mit vier Schiebern 5,6,7,8 ausgestattet, die einzeln oder aber zu mehreren betätigt werden können. Unterhalb des Bunkers ist eine kombinierte Schurren-Bandeinheit 9 angeordnet, die, wie dargestellt, verschiedene Positionen unterhalb des Bunkers 4 einnehmen kann. Steht die Schurren-Bandeinheit 9 in der rechten Position, so gibt sie einen Durchgang 10 frei, durch welchen Material aus den Schiebern 5-8 austreten kann. Steht die Schurren-Bandeinheit 9 in der linken Position, kann Material aus den Schiebern 5-8 über eine Schurre 11 auf einen Bandförderer 12 aufgegeben werden, der zum Zwecke der Restentleerung des Großraumbehälters 2 und/oder des Bunkers 4 das Material in einen seitlich stehenden weiteren Behälter 13 aufgibt, von wo aus es dann seiner weiteren Bestimmung zugeführt wird. Unterhalb der Schurren-Bandeinheit 9 ist ein Wiegebehälter 14 angeordnet, der in drei Kammern 15,16,17 unterteilt ist. Die beiden äußeren Kammern 15 und 17 fassen jeweils 25 cbm, während die dazwischen angeordnete Kammer 16 ein Fassungsvermögen von 50 cbm beinhaltet. Die beiden äußeren Kammern 15,17 sindmit je einem Auslaufschieber 18,19 und die Kammer 16 ist mit zwei Auslaufschiebern 20,21 ausgerüstet. Über Schurren 22,23 und nachgeschaltete Rutschen 24,25,26,27 gelangt das genau dosierte Schüttgut in die angedeuteten unterschiedlich großen Waggons 28,29. Der kleinere Waggon 28 soll in diesem Beispiel ein Fassungsvolumen von 25 cbm aufweisen, während der größere Waggon 29 ein Fassungsvolumen von 50 cbm haben soll. Soll nun der kleine Waggon 28 beladen werden, wird das in den Kammern 15 bzw. 17 vorhandene genau dosierte Schüttgut über die zugehörigen Schieber 18 bzw. 19 ausgetragen.

## Patentansprüche

1. Einrichtung zum Beladen unterschiedlich großer Waggons (28,29) mit Schüttgut, das in einem Bunker (4) angeordnet ist, mit einem in mehrere Kammern (15,16,17) unterteilten Behälter (14), der auslaufseitig für die wahlweise Beladung mit mehreren Auslaufschiebern (18,19,20,21) versehen ist.

2. Einrichtung nach Anspruch 1, dadurch gekennzeichnet, daß der Behälter (14) als Wiegebehälter ausgebildet ist.

3. Einrichtung nach den Ansprüchen 1 und 2, dadurch gekennzeichnet, daß der Wiegebehälter (14) in drei Kammern (15-17) unterteilt ist.

4. Einrichtung nach den Ansprüchen 1 bis 3, dadurch gekennzeichnet, daß der Wiegebehälter (14) auslaufseitig mit zwei (18,19) bzw. vier Auslaufschiebern (18-21) versehen ist.

5. Einrichtung nach den Ansprüchen 1 bis 4, dadurch gekennzeichnet, daß der Bunker (4) oberhalb des Wiegebehälters (14) vorgesehen ist.

6. Einrichtung nach den Ansprüchen 1 bis 5, dadurch gekennzeichnet, daß zwischen dem Bunker (4) und dem Wiegebehälter (14) eine verfahrbare Schurren-Bandeinheit (9) angeordnet ist.

7. Einrichtung nach den Ansprüchen 1 bis 6, dadurch gekennzeichnet, daß der Bunker (4) mit mehreren Materialaustragsstellen (5,,6,7,8) versehen ist.
